(19) Europäisches Patentamt
European Patent Office
Office européen des brevets

(11) Publication number: **0 656 376 A1**

(12) **EUROPEAN PATENT APPLICATION**

(21) Application number: **94118855.9**

(51) Int. Cl.[6]: **C08F 255/00**, C08L 51/06

(22) Date of filing: **30.11.94**

(30) Priority: **01.12.93 JP 338889/93**

(43) Date of publication of application: **07.06.95 Bulletin 95/23**

(84) Designated Contracting States: **BE DE FR GB IT**

(71) Applicant: **KANEGAFUCHI KAGAKU KOGYO KABUSHIKI KAISHA**
**2-4 Nakanoshima 3-chome**
**Kita-ku**
**Osaka-shi (JP)**

(72) Inventor: **Munakata, Yasumitsu**
**14-1, Sumiyoshi Honmachi 2-chome,**
**Higashinada-ku**
**Kobe-shi,**
**Hyogo-ken (JP)**
Inventor: **Kurimoto, Kenji**
**17-11, Wakabadai 3-chome,**
**Kita-ku**
**Kobe-shi,**
**Hyogo-ken (JP)**
Inventor: **Tomita, Haruo**
**1-110, Tomogaoka 4-chome,**
**Suma-ku**
**Kobe-shi,**
**Hyogo-ken (JP)**

(74) Representative: **VOSSIUS & PARTNER**
**Siebertstrasse 4**
**D-81675 München (DE)**

(54) **Graft-modified polyolefin resin composition and thermoplastic resin composition containing the same.**

(57) A graft-modified polyolefin resin composition being excellent in mechanical properties is provided, which is obtainable by preparing an aqueous suspension containing 100 weight parts of a polyolefin resin (a), 0.1-30 weight parts of a compound (b) having a glycidyl group and 0.01-10 weight parts, per 100 weight parts of said polyolefin resin (a), of a radical polymerization initiator (c) to thus impregnate the compound (b) into the polyolefin resin (a), contained in the aqueous suspension, and graft-polymerizing the compound (b). The resin composition has well-balanced mechanical properties without less of color inherent thereto.

EP 0 656 376 A1

The present invention relates to a graft-modified polyolefin resin composition and thermoplastic resin compositions containing it. More particularly, it relates to resin compositions which are improved in e.g. mechanical properties, adhesiveness, dyeability and paintability and which are low in the degree of coloring and less costly.

Polyolefin resins are excellent in mechanical properties, chemical properties, physical properties and moldability, and are widely in use as a cheap plastic material.

However, polyolefin resins are low in affinity with metals, glass, polar high molecular materials because of their nonpolarity, and thus, compositions with these materials are difficult.

Meanwhile, however, efforts have been made for improvement of the chemical properties such as adhesiveness, paintability and printability through addition of functional groups to a polypropylene resin, and new methods have been proposed for graft-polymerization of maleic acid anhydride or unsaturated compounds having glycidyl groups for improvement of compatibility with other polymers in the presence of a radical polymerization initiator (for example, JP-B-290418/91).

By such conventional methods, however, it is difficult to achieve uniform grafting of such compounds onto polyolefin resins, this resulting in insufficient compatibility between polymers at the interface, thus leading to unfavorable balance with regard to mechanical properties, when they are used together. While unmodified polyolefin resins are colorless, modified polyolefin resins are yellowish except under specific producing conditions, this being unfavorable when the modified polyolefins are used alone as products. Even when they are used in combination with other polymers as products, their yellowish shade is not preferable in appearance especially when they are white or transparent thermoplastic resins.

Further, the compounds having functional groups incorporated for improvement of such drawbacks are expensive, this leading to loss of the cost advantage of polyolefin resins known as cheap plastic materials.

Furthermore, although in JP-A-83110/88 it is described that polystyrene resin compositions obtainable when styrene monomer and epoxy monomer are impregnated in olefin polymers or diene rubbers in an aqueous suspension are used as a dispersibility-improver for other kinds of resins, it is difficult that such resin compositions are capable of providing excellent and well-balanced mechanical properties.

An object of the present invention is to provide a graft-modified polyolefin resin obtainable by grafting onto a polyolefin resin a glycidyl group-containing monomer, or a glycidyl group-containing monomer and a vinyl monomer, which overcomes the drawbacks associated with the prior art as mentioned above.

Another object of the present invention is to provide a thermoplastic resin composition having excellent and well-balanced mechanical properties, comprising a mixture of this graft-modified polyolefin resin and a thermoplastic resin.

These objects could be achieved with a graft-modified polyolefin resin which can be obtained through reaction between a polyolefin resin and a compound having a specific glycidyl group or both such compound and a vinyl monomer in the presence of a radical polymerization initiator.

The present invention is, in a first aspect, to provide a graft-modified polyolefin resin composition (A1) obtainable by preparing an aqueous suspension containing 100 weight parts of a polyolefin resin (a), 0.1-30 weight parts of a compound (b) represented by the following general formula (I)

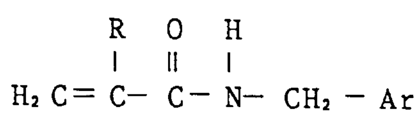

( I )

wherein Ar represents an aromatic hydrocarbon group having 6 to 23 carbon atoms and at least one glycidyloxy group and R represents a hydrogen atom or a methyl group, and 0.01-10 weight parts, per 100 weight parts of the polyolefin resin (a), of a radical polymerization initiator (c) to thus impregnate the compound (b) into the polyolefin resin (a), contained in the aqueous suspension, and graft-polymerizing the compound (b).

The present invention is, in a second aspect, to provide a graft-modified polyolefin resin composition (A2) obtainable by preparing an aqueous suspension containing 100 weight parts of a polyolefin resin (a), 0.1-30 weight parts of a compound (b) represented by the following general formula (I)

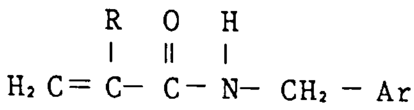

(I)

wherein Ar represents an aromatic hydrocarbon group having 6 to 23 carbon atoms and at least one glycidyloxy group and R represents a hydrogen atom or a methyl group, and 0.01-10 weight parts, per 100 weight parts of said polyolefin resin (a), of a radical polymerization initiator (c), heating the aqueous suspension under conditions substantially preventing the compound (b) from homopolymerization, to thus impregnate the compound (b) into the polyolefin resin (a), contained in the aqueous suspension, and graft-polymerizing the compound (b) by heating the aqueous suspension to not less than a temperature at which the crystalline part of the polyolefin resin (a) contained in the aqueous suspension is substantially melted.

The present invention is, in a third aspect, to provide a graft-modified polyolefin resin composition (A3) obtainable by preparing an aqueous suspension containing 100 weight parts of a polyolefin resin (a), 1-500 weight parts of a vinyl monomer (d), 0.1-30 weight parts of a compound (b) represented by the following general formula (I)

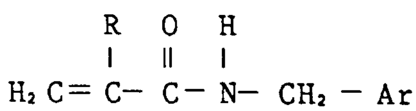

(I)

wherein Ar represents an aromatic hydrocarbon group having 6 to 23 carbon atoms and at least one glycidyloxy group and R represents a hydrogen atom or a methyl group, and 0.01-10 weight parts, per 100 weight parts of the total amount of the components (d) and (b), of a radical polymerization initiator (c), to thus impregnate the vinyl monomer (d) and the compound (b) into the polyolefin resin (a), contained in the aqueous suspension, and graft-polymerizing the vinyl monomer (d) and the compound (b).

The present invention is, in a fourth aspect, to provide a graft-modified polyolefin resin composition (A4) obtainable by preparing an aqueous suspension containing 100 weight parts of a polyolefin resin (a), 1-500 weight parts of a vinyl monomer (d), 0.1-30 weight parts of a compound (b) represented by the following general formula (I)

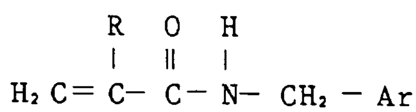

(I)

wherein Ar represents an aromatic hydrocarbon group having 6 to 23 carbon atoms and at least one glycidyloxy group and R represents a hydrogen atom or a methyl group, and 0.01-10 weight parts of a radical polymerization initiator (c), per 100 weight parts of the total amount of the components (d) and (b), heating the aqueous suspension under conditions substantially preventing the vinyl monomer (d) and the compound (b) from homopolymerization or copolymerization, to thus impregnate the vinyl monomer (d) and the compound (b) into the polyolefin resin (a), contained in the aqueous suspension, and graft-polymerizing the vinyl monomer (d) and the compound (b) by heating the aqueous suspension to not less than a temperature at which the crystalline part of the polyolefin resin (a) contained in the aqueous suspension is substantially melted.

The present invention is, in a fifth aspect, to provide a thermoplastic resin composition being excellent in mechanical properties which comprises 1-99 weight % of the graft-modified polyolefin resins (A1)-(A4) as recited above and 99-1 weight % of at least one kind of thermoplastic resins selected from polyester resins, polyamide resins and polycarbonate resins.

The polyolefin resin (a) used in the present invention includes not only polyolefins in a narrow sense, but polydienes, mixtures of one or more of foregoings and copolymers comprising olefin monomers and diene monomers in a broad sense. Examples are ethylene, propylene, 1-butene, 1-pentene, iso-butene, butadiene, isoprene, chloroprene, phenylpropadiene, cyclopentadiene, 1,5-norbornanodiene, 1,3-cyclohexadiene, 1,4-cyclohexadiene, 1,5-cyclooctadiene, 1,3-cyclooctadiene and $\alpha$ , $\omega$-nonconjugated dienes, and mixtures of homopolymers or copolymers or the both.

The compound (b) represented by the general formula (I)

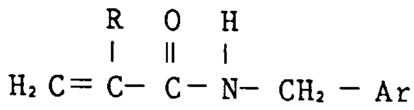

( I )

wherein Ar represents an aromatic hydrocarbon group having 6 to 23 carbon atoms and R represents a hydrogen atom or a methyl group, derives from compounds having at least one acrylamide group and glycidyl group, respectively. The acrylamide group also includes, besides an acrylamide group, a methacrylamid group.

Such compounds can be produced by a method described in JP-A- 130580/85. That is, it is obtained by condensing an aromatic hydrocarbon having at least one phenolic hydroxyl group with N-methylol acrylamide or N-methylol methacrylamide in the presence of an acidic catalyst and then by glycidylization of the hydroxyl group by the use of an epihalohydrin. As the aforementioned aromatic hydrocarbon having at least one phenolic hydroxyl group, a phenol compound having 6 to 23 carbon atoms is used. As specific examples of the afore-mentioned phenolic compound, there may be included phenol, cresol, xylenol, carbachlor, thymol, naphthol, resorcin, hydroquinone, pyrogallol and phenanthrol. Of these compounds, most preferred may be a mono-valent phenol having an alkyl substitution group. When, for example, 2,6-xylenol and N-methylol acrylamide are used as starting materials, a compound represented by the following structural formula (II) will be obtained.

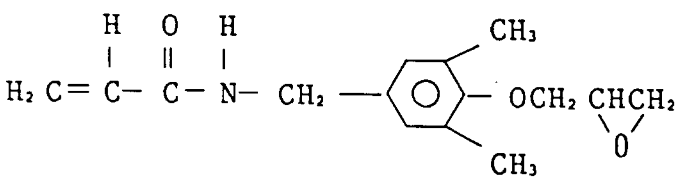

( II)

When ortho-cresol and N-methlol acrylamide is used as starting materials, the resultant compound represented by the following structural formula (III) will be obtained.

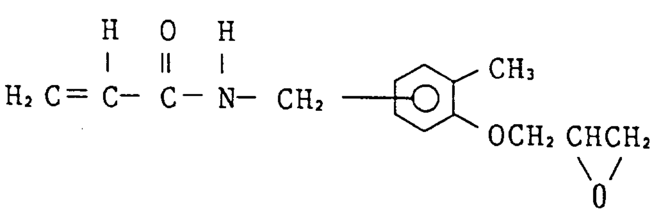

( III)

The vinyl monomer (d) used in the present invention includes, for example, aromatic vinyl compounds such as styrene, o-methylstyrene, p-methylstylene, m-methylstyrene, $\alpha$-methylstyrene, vinyltoluene and divinylbenzene, methacrylic acid alkyl esters having 1 to 22 carbon atoms in the alkyl group such as methyl methacrylate, ethyl methacrylate, n-butyl methacrylate, i-propyl methacrylate, t-butyl methacrylate, 2-ethylhexyl methacrylate, stearyl methacrylate, acrylic acid alkyl esters having 1 to 22 carbon atoms in the alkyl group such as methyl acrylate, ethyl acrylate, n-butyl acrylate, i-butyl acrylate, t-butyl acrylate, 2-ethylhexyl acrylate and stearyl acrylate, vinyl alkyl ethers having 1 to 22 carbon atoms in the alkyl group such as vinyl methyl ether, vinyl ethyl ether, vinyl i-propyl ether, vinyl n-propyl ether, vinyl i-butyl ether, vinyl n-amyl ether, vinyl i-amyl ether, vinyl 2-ethylhexyl ether and vinyl octadecyl ether, unsaturated nitrile compounds such as acrylonitrile and methacrylonitrile, unsaturated amino compounds such as acrylamide and, methacrylamide, maleic acid dialkyl esters such as maleic acid di-n-amyl ester, maleic acid di-n-bytyl ester, maleic acid di-i-amyl ester, maleic acid di-i-butyl ester, maleic acid dimethyl ester, maleic acid di-n-propyl ester, maleic acid di-octyl ester and maleic acid di-nonyl ester, allyl alkyl ethers having 1 to 8 carbon atoms in the alkyl group such as allyl ethyl ether and allyl n-octyl ether, diene compounds such as dicyclopentadiene, butadiene, isoprene, chloroprene, phenylpropadiene, cyclopentadiene, 1, 5-norbornanodiene, 1,3-cyclohexadiene, 1,4-cyclohexadiene, 1,5-cyclohexadiene and 1,3-cyclooctadiene, and other vinyl monomers such as acrylic acid, methacrylic acid, maleic acid, maleic acid anhydride and vinyl acetate. These are used singly or in combination of two or more.

The radical polymerization initiator (c) used in the present invention includes, for example, organic peroxides such as methyl ethyl keton peroxide, di-t-butyl peroxide, 1,1-bis(t-butylperoxy)-3,3,5-trimethyl cyclohexane, n-butyl -4,4-bis(t-butylperoxy)valerate, 2,5-dimethylhexane-2,5-dihydroxy peroxide, dicumyl peroxide, α , α'-bis(t-butylperoxy-m-isopropyl) benzene, 2,5-dimethyl-2,5-di(t-butylperoxy)hexane, 2,5-dimethyl-2,5-di(t-butylperoxy) hexine-3 and benzoyl peroxide, or azo compounds such as 1,1'-azobis-(cyclohexane-1-carbonitrile), 1-[(1-cyano-1-methylethyl)azo] formamide, 2-phenylazo-4-methoxy-2,4-dimethyl-valeronitrile, 2,2'-azobis(2-methyl butylonitrile), 2,2'-azobisisobutylonitrile, 2,2'-azobis(2,4,4-trimethyl pentane), 2-2'-azobis(2-acetoxypropane) and 2,2'-azobis(2-acetoxybutane). These are used singly or in combination of two or more. Moreover, these may be optionally selected according to impregnation and polymerization conditions.

In the first and in the second embodiment of the present invention relating to graft-modified polyolefin resin compositions (A1), (A2), the proportions of the polyolefin resin (a), the compound (b) and the radical polymerization initiator (c) are as follows. The compound (b) is, per 100 weight parts of the polyolefin resin (a), 0.1-30 weight parts, preferably 1-10 weight parts of the compound (b). If the proportion is more than the given range, the mechanical properties and fluidity of the polyolefin resin may be deteriorated, while if the proportion is less than the given range, compatibility with thermoplastic resins is poor.

The radical polymerization initiator (c) is, per 100 weight parts of polyolefin resin (a), 0.01-10 weight parts, preferably 1-10 weight parts and more preferably 1-5 weight parts. If the proportion is less than 0.01 weight parts, graft-polymerization of the compound (b) and formation of the radical initiation point for the polyolefin resin (a) is insufficient, while if the proportion exceeds 10 weight parts, radical-induced crosslinking reaction of the polyolefin resin (a) or the molecular weight of the polyolefin resin (a) is decreased due to severing of main chain, this resulting in deterioration of the mechanical properties and being thus unfavorable.

As in the graft-modified polyolefin resin compositions (A2), the compound (b) can be added uniformly and efficiently, as a result, compatibility with thermoplastic resins is improved by first heating an aqueous suspension, under conditions substantially preventing homopolymerization of the compound (b), to have the compound (b) impregnated in the polyolefin resin (a) in the aqueous suspension and thereafter graft-polymerizing the compound (b) by heating the aqueous suspension containing the polyolefin resin (a) impregnated with the compound (b) to not less than a temperature at which the crystalline part of the polyolefin resin (a) is substantially melted.

In the third and fourth of the present invention relating to graft-modified polyolefin resin compositions (A3), (A4), the proportions of the vinyl monomer (d), compound (b) and the radical polymerization initiator (c) are as follows. The vinyl monomer (d) is, per 100 weight parts of the polyolefin resin (a), 1-500 weight parts, preferably 5-200 weight parts and still more preferably 10-100 weight parts. If the proportion of the vinyl monomer (d) is less than 1 weight part, the balance of the mechanical properties of the graft-modified polyolefin resin is deteriorated, and it is difficult to reduce color change of the polyolefin resin through modification by graft-copolymerizing the cheap vinyl monomer and a small amount of the compound, and further cost-saving of the graft-modified polyolefin resin is insufficient. When its proportion is in excess of 500 weight parts, homopolymerization of the vinyl monomer (d) alone predominantly proceeds, this resulting in excessive flocculation, fusion, bulking etc. in the aqueous suspension during polymerization.

The proportion of the compound (b) is 0.1-30 weight parts, preferably 1-10 weight parts per 100 weight parts of the polyolefin resin (a). If it is more than this range, the mechanical properties and fluidity are deteriorated, while, if it is less than this range, compatibility with thermoplastic resins is decreased.

The proportion of the radical polymerization initiator (c) is 0.01-10 weight parts, preferably 1-10 weight parts and still more preferably 1-5 weight parts per 100 weight parts of the total amount of the vinyl monomer (d) and the compound (b). If the proportion of the radical polymerizable initiator (c) is less than 0.01 weight part, polymerization of the vinyl monomer (d) and the compound (b) and creation of the radical initiating point for the polyolefin resin (a) are insufficient, while, if the proportion is more than 10 weight parts, radical crosslinking reaction of the polyolefin resin (a) or the molecular weight being decreased by severing of the main chain is invited, resulting in deterioration of the mechanical properties, thus being unfavorable.

As in the graft-modified polyolefin resin compositions (A4), the vinyl monomer (d) and the compound (b) can be added uniformly and efficiently, as a result, compatibility with thermoplastic resins is improved by first heating the aqueous suspension, under conditions substantially preventing homopolymerization or copolymerization of the vinyl monomer (d) and the compound (b), to thus impregnate the vinyl monomer (d) and the compound (b) into the polyolefin resin (a), in the aqueous suspension, and thereafter graft-polymerizing the vinyl monomer (d) and the compound (b) by heating the aqueous suspension containing the polyolefin resin (a) impregnated with the vinyl monomer (d) and the compound (b) to not less than a temperature at which the crystalline part of the polyolefin resin (a) is substantially melted.

For the preparation of graft-modified polyolefin resin compositions, for example, water, suspending agents, emulsifiers and dispersants may be optionally used, and there is no limitation if the aqueous suspension of a reaction mixture of components is kept stable without excessive flocculation or fusion, regardless of the kinds of these additives used, pressure applied and mode of stirring. As the proportion of water, a preferable proportion of water is 100-800 weight parts per 100 weight parts of the polyolefin resin (a). If it is less than this range, a homogeneous suspension is difficult to obtain, and if it is more than this range, impregnation with the vinyl monomer (d) and the compound (b) into the polyolefin resin (a) is deteriorated. The preferable proportion of dispersants is 0.1-5.0 weight parts per 100 weight parts of the polyolefin resin (a). If it is less than this range, the polyolefin resin (a) is blocked, and if it is more than this range, mechanical properties are deteriorated.

The polyester resins used in the present invention are polymers or copolymers obtained by condensation reaction of aromatic dicarboxilic acids or their ester forming derivatives and diols or their ester derivatives as principal ingredients, or ring opening polymers of lactones.

The aromatic dicarboxylic acid includes, for example, terephthalic acid, isophthalic acid, phthalic acid, 2,6-naphthalene dicarboxylic acid, bis (p-carboxyphenyl) methane, anthracene dicarboxylic acid, 4,4'-diphenyl carboxylic acid, 4,4'-diphenylether carboxylic acid, ester forming derivatives thereof or mixtures thereof.

The diol includes, for example, aliphatic diols of $C_2$-$C_{10}$ such as ethylene glycol, 1,3-propane diol, 1,4-butane diol, neopentyl glycol, 1,5-pentane diol, 1,6-hexane diol, 1,8-octadiol and cyclohexane diol, and long chain glycols 400-6,000 in molecular weight, such as polyethylene glycol, poly-1,3-polypropylene glycol and p olytetramethylene glycol, and mixtures thereof.

The polyester resin used in the present invention includes, for example, polyethylene terephthalate, polypropylene terephthalate, polybutylene terephthalate, polyhexamethylene terephthalate, polyethylene-2,6-naphthalate and polyethylene-1,2-bis (phenoxy) ethane-4,4'-dicarboxylate. These are used singly or in combination of two or more.

The polyamide resin used in the present invention is generally called "Nylon" and those having acid amide bond (-CONH-) as repetitive units are usable without any limitation. According to the mode of polymerization reaction, there are included (1) polyamide resins made by ring opening polymerization of lactams, (2) polyamide resins made by reaction of aliphatic diamines with at least one of aliphatic carboxylic acids, their acid anhydrides, and their acid halides and (3) polyamide resins made by polycondensation of aminocarboxylic acid.

Examples are polycaprolactam (Nylon-6), polyhexamethylene adipamide (Nylon-66), Nylon-610, Nylon-12, Nylon-9 and Nylon-11. Copolymers or mixtures of two or more may as well be used.

The polycarbonate resin used in the present invention may generally be obtained by reacting bivalent phenols with carbonate precursors such as phosgene, halogen formate (haloformate) and carbonate esters. In the present invention, homopolymers derived from bisphenol A are suitably used.

Further, the thermoplastic resins of the present invention may include, if necessary, stabilizers, antioxidants, flame-retardants, UV-absorbents, antistatic agents, nucleating agents, inorganic and organic reinforcing materials and fillers.

The present invention will be described in greater detail with reference to examples but it is in no way limited thereto.

In the following description, "part" or "%" means " weight part" or "weight %" unless otherwise noted.

[Synthesis of the compound (b)]

Reference example

A mixture of 102.26 parts of 4-acrylamidemethyl-2,6-dimethyl phenol, 181 parts of epichlorohydrine and 2.27 parts of benzyltriethyl ammonium chloride were stirred for 30 minutes at 100 °C. This reaction mixture was then cooled to the room temperature, 147 parts of 5N sodium hydroxide was dripped thereinto in 10

minutes and the mixture was stirred for 1 hour at 45-50 °C . The resulting reaction mixture was cooled to room temperature, 120 parts of methyl isobutyl ketone and 500 parts of water were then added thereto and filtered through a separating funnel. The resulting layer of organic matters was rinsed with 300 parts of water 3 times and after dehydration with sodium sulfate anhydride the solvent was distilled off and N-[(2,3-epoxypropoxy)-3,5-dimethyl phenylmethyl] acrylamide [compound (b)] was thus obtained. Its epoxy equivalent measured by JIS K7236 was 271 and its melting point was 90-92 °C.

[Preparation of graft-modified polyolefin resin compositions (A2) and (A4)]

Example 1

In a pressure-resistant closed reaction vessel, 490 parts of random polypropylene copolymer particles (ethylene content 3%, DSC melting starting temperature 80 °C, DSC melting point 146.7 °C), 210 parts of the compound (b), 1.26 parts of di-t-butyl peroxide (10 hours half life temperature 124 °C ), 10.5 parts of calcium phosphate and 0.315 parts of an emulsifier (Latemul PS® , produced by Kao Co., Ltd.) were added to 1,400 parts of deionized water and an aqueous suspension was obtained by subsequent stirring. The aqueous solution was first stirred at 100 °C and then at 140 °C for 5 hours to thus complete the graft-polymerization. The resulting particles were rinsed with water and dried after removal of remaining monomer, calcium phosphate, Latemul PS® and di-t-butyl peroxide, and a graft-modified polyolefin resin composition was thus obtained.

Example 2

A graft-modified polyolefin resin composition was obtained in the same way as in Example 1, except that 139.8 parts of styrene monomer and 70.2 parts of the compound (b) were used instead of 210 parts of the compound (b)[molar ratio of styrene monomer/compound (b) being 5/1].

Example 3

A graft-modified polyolefin resin composition was obtained in the same way as in Example 1, except that 138 parts of methyl methacrylate monomer and 72 parts of the compound (b) were used instead of 210 parts of the compound [molar ratio of methyl methacrylate monomer/compound (b) being 5/1].

Example 4

A graft-modified polyolefin resin composition was obtained in the same way as in Example 1, except that 149.2 parts of butyl acrylate monomer and 60.8 parts of the compound (b) were used instead of 210 parts of the compound (b)[molar ratio of butyl acrylate monomer/compound (b) being 5/1].

Comparative example 1

A graft-modified polyolefin resin composition was obtained in the same way as in Example 1, except that 210 parts of glycidyl methacrylate monomer (produced by Wako Junyaku Co., Ltd., hereinafter referred to as GMA) was used instead of 210 parts of the compound (b).

Comparative example 2

A graft-modified polyolefin resin composition was obtained in the same way as in Example 1, except that 165 parts of styrene monomer and 45 parts of GMA were used instead of 210 parts of the compound (b) [molar ratio of styrene monomer/GMA being 5/1].

Comparative example 3

A graft-modified polyolefin resin composition was obtained in the same way as in Example 1, except that 163.6 parts of methyl methacrylate monomer and 46.4 parts of GMA were used instead of 210 parts of the compound (b)[molar ratio of methyl methacrylate monomer/GMA being 5/1].

Comparative example 4

A graft-modified polyolefin resin composition was obtained in the same way as in Example 1, except that 171.9 parts of butyl acrylate monomer and 38.1 parts of GMA were used instead of 210 parts of the compound (b)[molar ratio of butyl acrylate monomer/GMA being 5/1].

(Preparation of thermoplastic resin compositions)

Examples 5-8, Comparative examples 5-8

10 parts of each of the graft-modified polyolefin resin compositions obtained in Examples 1-4 and Comparative examples 1-4 and 0.09 parts of tetrabutyl phosphonium bromide (TBPB) (produced by Aldrich Chemical Company) as a catalyst were mixed with 90 parts of a polybutyrene terephthalate resin (S2002® , produced Polyplastics Co., Ltd. ), the resulting mixtures were fed to a twin-screw extruder (TEX44® , produced by the Japan Steel Works, Ltd.) set at 240 °C at a rate of 15 kg/hour and melt-kneaded at a screw-rotating speed of 100 rpm. Thermoplastic resin compositions were obtained by cooling the extrudates with water, followed by pelletizing and then vacuum drying at 120 °C for 12 hours.

Examples 9-12, Comparative examples 9-12

10 parts of each of the graft-modified polyolefin resin compositions obtained in Examples 1-4 and Comparative examples 1-4 and 0.09 parts of tetrabutyl phosphonium bromide (TBPB) (produced by Aldrich Chemical Company) as a catalyst were mixed with 90 parts of Nylon-6 (UBE1013® , produced by Ube Industries Co., Ltd.), the resulting mixtures were fed to a twin-screw extruder (TEX44® , produced by the Japan Steel Works, Ltd.) set at 250 °C at a rate of 15 kg/hour and melt-kneaded at a screw-rotating speed of 100 rpm. Thermoplastic resin compositions were obtained by cooling the extrudates with water, followed by pelletizing and then vacuum drying at 120 °C for 12 hours.

Examples 13-16, Comparative examples 13-16

10 parts of each of the graft-modified polyolefin resin compositions obtained in Examples 1-4 and Comparative examples 1-4 and 0.09 parts of tetrabutyl phosphonium bromide (TBPB) (produced by Aldrich Chemical Company) were mixed with 90 parts of a polycarbonate resin (Panlite L-1250 ® , produced by Teijin Kasei, Ltd.), the resulting mixtures were fed to a twin-screw extruder (TEX44® , produced by The Japan Steel Works, Ltd.) set at 280 °C at a rate of 15 kg/hour and melt-kneaded at a screw-rotating speed of 100 rpm. Thermoplastic resin compositions were obtained by cooling the extrudates with water, followed by pelletizing and then vacuum drying at 120 °C for 12 hours.

[Preparation of graft-modified polyolefin resin compositions (A1) and (A3)]

Example 17

In a pressure-resistant closed reaction vessel, 490 parts of random polypropylene copolymer particles (ethylene content 3%, DSC melting starting temperature 80°C , DSC melting point 146.7 °C ), 210 parts of the compound (b ), 1.26 parts of di-t-butyl peroxide (10 hours half life temperature 124°C ), 10.5 parts of calcium phosphate and 0.315 parts of an emulsifier (Latemul PS® , produced by Kao Co., Ltd.) were added to 1,400 parts of deionized water and the resulting mixture was stirred at the room temperature for 5 hours. The aqueous solution was further stirred at 140 °C for 5 hours to thus complete the graft-polymerization. The resulting particles were rinsed with water and dried after removal of remaining monomer, calcium phosphate, Latemul PS® and di-t-butyl peroxide and a graft-modified polyolefin resin composition was thus obtained.

Example 18

A graft-modified polyolefin resin composition was obtained in the same way as in Example 17, except that 139.8 parts of styrene monomer and 70.2 parts of the compound (b) were used instead of 210 parts of the compound (b)[molar ratio of styrene monomer/compound (b) being 5/1].

Example 19

A graft-modified polyolefin resin composition was obtained in the same way as in Example 17, except that 138 parts of methyl methacrylate monomer and 72 parts of the compound (b) were used instead of 210 parts of the compound (b) [molar ratio of methyl methacrylate monomer/compound (b) being 5/1].

Example 20

A graft-modified polyolefin resin composition was obtained in the same way as in Example 17, except that 149.2 parts of butyl acrylate monomer and 60.8 parts of the compound (b) were used instead of 210 parts of the compound (b)[molar ratio of butyl acrylate monomer/compound (b) being 5/1].

Comparative example 17

A graft-modified polyolefin resin composition was obtained in the same way as in Example 17, except that 210 parts of glycidyl methacrylate monomer (produced by Wako Junyaku Co., Ltd., hereinafter refered to as GMA) were used instead of 210 parts of the compound (b).

Comparative example 18

A graft-modified polyolefin resin composition was obtained in the same way as in Example 17, except that 165 parts of styrene monomer and 45 parts of GMA were used instead of 210 parts of the compound (b)[molar ratio of styrene monomer/GMA being 5/1].

Comparative example 19

A graft-modified polyolefin resin composition was obtained in the same way as in Example 17, except that 163.6 parts of methyl methacrylate monomer and 46.4 parts of GMA were used instead of 210 parts of the compound (b)[molar ratio of methyl methacrylate monomer/GMA being 5/1].

Comparative example 20

A graft-modified polyolefin resin composition was obtained in the same way as in Example 17, except that 171.9 parts of butyl acrylate monomer and 38.1 parts of GMA were used instead of 210 parts of the compound (b)[molar ratio of butyl acrylate monomer/GMA being 5/1].

(Preparation of thermoplastic resin compositions)

Examples 21-24, Comparative examples 21-24

10 parts of each of the graft-modified polyolefin resin compositions obtained in Examples 17-20 and Comparative examples 17-20 and 0.09 parts of tetrabutyl phosphonium bromide (TBPB) (produced by Aldrich Chemical Company) as a catalyst were mixed with 90 parts of a polybutyrene terephthalate resin (S2002® , produced by polyplastics Co., Ltd.), the resulting mixtures were fed to a twin-screw extruder (TEX44® , produced by The Japan Steel Works, Ltd. ) set at 240°C at a rate of 15 kg/hour and melt-kneaded at a screw-rotating speed of 100 rpm. Thermoplastic resin compositions were obtained by cooling the extrudades with water, followed by pelletizing and then vacuum drying at 120 °C for 12 hours.

The physical properties of the thermoplastic resin compositions obtained in Examples 5-16, 21-24 and Comparative examples 5-16, 21-24 were evaluated by the following methods.

The same evaluation was also made of the polybutylene terephthalate resin (Reference example 1), Nylon-6 resin (Reference example 2) and the polycarbonate resin (Reference example 3).

(Evaluation of thermoplastic resin compositions)

Evaluation of the degree of coloring:

The degree of yellowing (YI) of dried pellets of the individual resin compositions was measured according to JIS K7103 and the differences in the degree of yellowing (Δ YI) from pellets of the

polybutylene terephthalate, Nylon-6 and polycarbonate were determined. As a measuring device a color-difference meter Z- Σ 80 produced by Nippon Densho Co., Ltd., was used and the results were as shown in Tables 1, 2, 3 and 4.

Evaluation of tensile properties:

Specimens of the resin compositions obtained in Examples 5-8, 21-24 and Comparative examples 5-8, 21-24 as well as the polybutylene terephthalate resin in Reference example 1 were prepared by an injection molding machine (IS80EPN-2A® , produced by Toshiba Co., Ltd.) with a cylinder temperature and a mold temperature set at 240 °C and 50 °C respectively, specimens of the resin compositions obtained in Examples 9-12 and Comparative examples 9-12 as well as the Nylon-6 resin in Reference example 2 were prepared in the same manner with a cylinder temperature and a mold temperature set at 250 °C and 60 °C respectively, and specimens of the resin compositions obtained in Examples 13-16 and Comparative examples 13-16 as well as the polycarbonate resin in Reference example 3 were prepared in the same manner with a cylinder temperature and a mold temperature set at 280 °C and 80 °C respectively, and the tensile rupture elongation at 23 °C was evaluated by the method of ASTM D638. The results were as shown in Tables 1, 2, 3 and 4.

Evaluation of Izod impact strength.

Specimens of the resin compositions obtained in Examples 5-8, 21-24 and Comparative examples 5-8, 21-24 as well as the polybutylene terephthalate resin in Reference example 1 were prepared by an injection molding machine (IS80EPN-2A® , produced by Toshiba Co., Ltd.) with a cylinder temperature and a mold temperature set at 240 °C and 50 °C respectively, spesimens of the resin compositions obtained in Examples 9-12 and Comparative examples 9-12 as well as the Nylon-6 resin in Reference example 2 were prepared in the same manner with a cylinder temperature and a mold temperature set at 250 °C and 60 °C respectively, and specimens of the resin compositions obtained in Examples 13-16 and Comparative examples 13-16 as well as the polycarbonate resin in Reference example 3 were prepared in the same manner with a cylinder temperature and a mold temperature set at 280 °C and 80 °C respectively, and the V-notched Izod impact strength at 23 °C was evaluated by the method of ASTM D256. The results were as shown in Tables 1, 2, 3 and 4.

Evaluation of bending elastic modulus:

With 6.3 mm-thick specimens prepared by injection molding according to JIS K7203, the bending elastic modulus was measured and the results were as shown in Tables 1, 2, 3 and 4.

Table 1

| | PBT/MPO/TBPB | | | | Evaluation | | | |
|---|---|---|---|---|---|---|---|---|
| | PBT | MPO | | TBPB | Degree of coloring (ΔYI) | Izod strength (kg・cm/cm) | Tensile rupture elongation (%) | Bending elastic modulus (kg/mm²) |
| | Parts | Vinyl monomer | Parts | Parts | | | | |
| Example 5 | 90 | — | 10 | 0.09 | 12 | 10.4 | 83 | 243 |
| 6 | 90 | Styrene | 10 | 0.09 | 11 | 9.5 | 92 | 253 |
| 7 | 90 | Methyl methacrylate | 10 | 0.09 | 10 | 9.3 | 91 | 255 |
| 8 | 90 | Butyl acrylate | 10 | 0.09 | 10 | 12.4 | 103 | 238 |
| Comp. Ex. 5 | 90 | — | 10 | 0.09 | 17 | 5.3 | 40 | 217 |
| 6 | 90 | Styrene | 10 | 0.09 | 15 | 4.1 | 56 | 215 |
| 7 | 90 | Methyl methacrylate | 10 | 0.09 | 14 | 5.1 | 54 | 215 |
| 8 | 90 | Butyl acrylate | 10 | 0.09 | 14 | 6.1 | 68 | 210 |
| Ref. Ex. 1 | PBT only | | | | — | 2.1 | 172 | 233 |

PBT : Polybutyrene terephthalate resin

MPO : Modified polyolefin resin

TBPB : Tetrabutyl phosphonium bromide

Table 2

| | Ny-6 /MPO /TBPB | | | | Evaluation | | | |
|---|---|---|---|---|---|---|---|---|
| | Ny-6 | MPO | | TBPB | Degree of coloring (ΔYI) | Izod strength (kg · cm/cm) | Tensile rupture elongation (%) | Bending elastic modulus (kg/mm²) |
| | Parts | Vinyl monomer | Parts | Parts | | | | |
| Example 9 | 90 | —— | 10 | 0.09 | 12 | 13.4 | 83 | 220 |
| 10 | 90 | Styrene | 10 | 0.09 | 14 | 12.5 | 72 | 225 |
| 11 | 90 | Methyl methacrylate | 10 | 0.09 | 10 | 11.3 | 91 | 224 |
| 12 | 90 | Butyl acrylate | 10 | 0.09 | 11 | 14.4 | 93 | 218 |
| Comp. Ex. 9 | 90 | —— | 10 | 0.09 | 15 | 5.3 | 40 | 200 |
| 10 | 90 | Styrene | 10 | 0.09 | 18 | 4.1 | 46 | 205 |
| 11 | 90 | Methyl methacrylate | 10 | 0.09 | 14 | 3.1 | 44 | 204 |
| 12 | 90 | Butyl acrylate | 10 | 0.09 | 15 | 6.1 | 48 | 189 |
| Ref. Ex. 2 | Ny-6 only | | | | — | 3.1 | 143 | 252 |

NY-6 : Nylon-6 resin

MPO : Modified polyolefin resin

TBPB : Tetrabutyl phosphonium bromide

Table 3

| | PC/MPO/TBPB | | | | Evaluation | | | |
|---|---|---|---|---|---|---|---|---|
| | PBT | MPO | | TBPB | Degree of coloring (ΔYI) | Izod strength (kg · cm/cm) | Tensile rupture elongation (%) | Bending elastic modulus (kg/mm²) |
| | Parts | Vinyl monomer | Parts | Parts | | | | |
| Example 13 | 90 | — | 10 | 0.09 | 12 | 28.4 | 100 | 179 |
| 14 | 90 | Styrene | 10 | 0.09 | 14 | 27.5 | 92 | 180 |
| 15 | 90 | Methyl methacrylate | 10 | 0.09 | 10 | 27.3 | 91 | 182 |
| 16 | 90 | Butyl acrylate | 10 | 0.09 | 17 | 30.4 | 113 | 168 |
| Comp. Ex. 13 | 90 | — | 10 | 0.09 | 11 | 20.3 | 60 | 134 |
| 14 | 90 | Styrene | 10 | 0.09 | 13 | 20.1 | 56 | 140 |
| 15 | 90 | Methyl methacrylate | 10 | 0.09 | 12 | 19.1 | 54 | 136 |
| 16 | 90 | Butyl acrylate | 10 | 0.09 | 11 | 22.1 | 68 | 121 |
| Ref. Ex. 3 | PC only | | | | — | 15.1 | 138 | 200 |

PC : Polycarbonate resin

MPO : Modified polyolefin resin

TBPB : Tetrabutyl phosphonium bromide

Table 4

| | PBT/MPO/TBPB | | | | Evaluation | | | |
|---|---|---|---|---|---|---|---|---|
| | PBT | MPO | | TBPB | Degree of coloring (ΔYI) | Izod strength (kg・cm/cm) | Tensile rupture elongation (%) | Bending elastic modulus (kg/mm²) |
| | Parts | Vinyl monomer | Parts | Parts | | | | |
| Example 21 | 90 | — | 10 | 0.09 | 11 | 9.4 | 76 | 242 |
| 22 | 90 | Styrene | 10 | 0.09 | 11 | 8.6 | 83 | 245 |
| 23 | 90 | Methyl methacrylate | 10 | 0.09 | 12 | 8.2 | 87 | 250 |
| 24 | 90 | Butyl acrylate | 10 | 0.09 | 10 | 11.7 | 96 | 228 |
| Comp. Ex. 21 | 90 | — | 10 | 0.09 | 16 | 5.1 | 35 | 210 |
| 22 | 90 | Styrene | 10 | 0.09 | 16 | 4.0 | 46 | 213 |
| 23 | 90 | Methyl methacrylate | 10 | 0.09 | 15 | 5.1 | 45 | 212 |
| 24 | 90 | Butyl acrylate | 10 | 0.09 | 15 | 5.9 | 65 | 202 |
| Ref. Ex. 1 | PBT only | | | | — | 2.1 | 172 | 233 |

PBT : Polybutyrene terephthalate resin

MPO : Modified polyolefin

TBPB : Tetrabutyl phosphonium bromide

As described above, the thermoplastic resin compositions of the present invention have excellent well-balanced mechanical properties with their original colors retained and are widely suitable for use as molding materials as well as construction materials.

## Claims

**1.** A graft-modified polyolefin resin composition obtainable by preparing an aqueous suspension containing 100 weight parts of a polyolefin resin (a), 0.1-30 weight parts of a compound (b) represented by the following general formula (I)

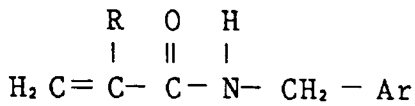

(I)

wherein Ar represents an aromatic hydrocarbon group having 6 to 23 carbon atoms and at least one glycidyloxy group and R represents a hydrogen atom or a methyl group, and 0.01-10 weight parts, per 100 weight parts of said polyolefin resin (a), of a radical polymerization initiator (c) to thus impregnate the compound (b) into the polyolefin resin (a), contained in the aqueous suspension, and graft-polymerizing the compound (b).

**2.** A graft-modified polyolefin resin composition obtainable by preparing an aqueous suspension containing 100 weight parts of a polyolefin resin (a), 0.1-30 weight parts of a compound (b) represented by the following general formula (I)

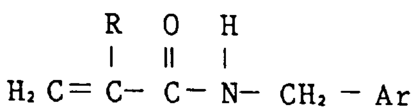

(I)

wherein Ar represents an aromatic hydrocarbon group having 6 to 23 carbon atoms and at least one glycidyloxy group and R represents a hydrogen atom or a methyl group, and 0.01-10 weight parts, per 100 weight parts of said polyolefin resin (a), of a radical polymerization initiator (c), heating the aqueous suspension under conditions substantially preventing the compound (b) from homopolymerization, to thus impregnate the compound (b) into the polyolefin resin (a), contained in the aqueous suspension, and graft-polymerizing the compound (b) by heating the aqueous suspension to not less than a temperature at which the crystalline part of the polyolefin resin (a) contained in the aqueous suspension is substantially melted.

**3.** A graft-modified polyolefin resin composition obtainable by preparing an aqueous suspension containing 100 weight parts of a polyolefin resin (a), 1-500 weight parts of a vinyl monomer (d), 0.1-30 weight parts of a compound (b) represented by the following general formula (I)

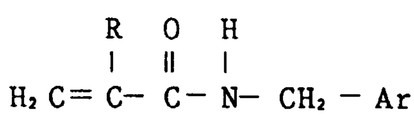

(I)

wherein Ar represents an aromatic hydrocarbon group having 6 to 23 carbon atoms and at least one glycidyloxy group and R represents a hydrogen atom or a methyl group, and 0.01-10 weight parts, per 100 weight parts of the total amount of the components (d) and (b), of a radical polymerization initiator (c), to thus impregnate the vinyl monomer (d) and the compound (b) into the polyolefin resin (a), contained in the aqueous suspension, and graft-polymerizing the vinyl monomer (d) and the compound (b).

**4.** A graft-modified polyolefin resin composition obtainable by preparing an aqueous suspension containing 100 weight parts of a polyolefin resin (a), 1-500 weight parts of a vinyl monomer (d), 0.1-30 weight parts of a compound (b) represented by the following general formula (I)

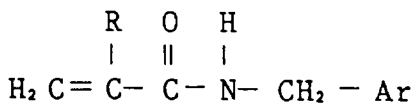

( I )

wherein Ar represents an aromatic hydrocarbon group having 6 to 23 carbon atoms and at least one glycidyloxy group and R represents a hydrogen atom or a methyl group, and 0.01-10 weight parts, per 100 weight parts of the total amount of the components (d) and (b), of a radical polymerization initiator (c), heating the aqueous suspension under conditions substantially preventing the vinyl monomer (d) and the compound (b) from homopolymerization or copolymerization, to thus impregnate the vinyl monomer (d) and the compound (b) into the polyolefin resin (a), contained in the aqueous suspension, and graft-polymerizing the vinyl monomer (d) and the compound (b) by heating the aqueous suspension to not less than a temperature at which the crystalline part of the polyolefin resin (a) contained in the aqueous suspension is substantially melted.

**5.** A graft-modified polyolefin resin composition according to claim 1 or 2, wherein at least one compound (b) is added to the polyolefin resin (a), and the molecular weight of the graft chain is not more than 400,000.

**6.** A graft-modified polyolefin resin composition according to claim 3 or 4, wherein at least one compound (b) and at least one vinyl monomer (d) are added to the polyolefin resin (a), and the molecular weight of the graft chain is not more than 400,000.

**7.** A graft-modified polyolefin resin composition according to any one of claims 1-6, wherein the polyolefin resin (a) is a homopolymer or a copolmer selected from one or more monomers selected from ethylene, propylene, 1-butene, 1-pentene, iso-butene, butadiene, isoprene, chloroprene, phenylpropadiene, cyclopentadiene, 1,5-norbornanodiene, 1,3-cyclohexadiene, 1,4-cyclohexadiene, 1,5-cyclooctadiene, 1,3-cyclooctadiene and $\alpha$ , $\omega$-nonconjugated dienes, and mixtures of homopolymers or copolymers or the both.

**8.** A graft-modified polyolefin resin composition according to any one of claims 1-7, wherein the structural unit having a glycidyl group of the compound (b) is represented by the following formula (II)

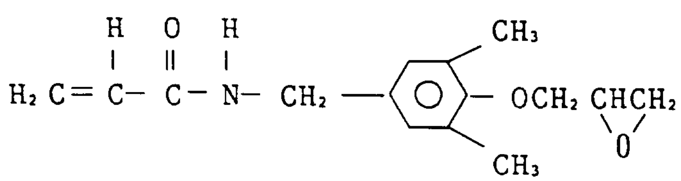

( II)

**9.** A graft-modified polyolefin resin composition according to claim 3, 4, 6, 7 or 8, wherein the vinyl monomer (d) is at least one selected from aromatic vinyl compounds, metacrylic acid alkyl esters having 1 to 22 carbon atoms in the alkyl group, acrylic acid alkyl esters having 1 to 22 carbon atoms in the alkyl group, vinyl alkyl ethers having 1 to 22 carbon atoms in the alkyl group, unsaturated nitrile compounds, unsaturated amino compounds, maleic acid dialkyl esters having 1 to 9 carbon atoms in the alkyl group, allyl alkyl ethers having 1 to 8 carbon atoms in the alkyl group, diene compounds, maleic acid anhydride, maleic acid, acrylic acid, methacrylic acid and vinyl acetate.

**10.** A graft-modified polyolefin resin composition according to claim 9, wherein the vinyl monomer is at least one selected from styrene, methyl methacrylate and butyl acrylate.

**11.** A thermoplastic resin composition excellent in mechanical properties which comprises 1-99 weight % of the graft-modified polyolefin resins recited in claims 1-10 and 99-1 weight % of at least one kind of thermoplastic resins selected from polyester resins, polyamide resin and polycarbonate resins.

European Patent Office

# EUROPEAN SEARCH REPORT

Application Number
EP 94 11 8855

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 596 654 (TONEN CORP.)<br>* claims *<br>--- | 1-11 | C08F255/00<br>C08L51/06 |
| X | EP-A-0 480 069 (KANEGAFUCHI K.K.K.K.)<br>* claims 1,6,8 *<br>--- | 1,2,5,7,8,11 | |
| X | EP-A-0 459 766 (TONEN CORP.)<br>* examples *<br>--- | 1,2,5,7,8,11 | |
| D,X | EP-A-0 450 982 (TONEN CORP.)<br>* page 6, line 14 - line 22; examples *<br>----- | 1,2,5,7,8,11 | |

TECHNICAL FIELDS SEARCHED (Int.Cl.6)

C08F
C08L

The present search report has been drawn up for all claims

| Place of search | Date of completion of the search | Examiner |
|---|---|---|
| THE HAGUE | 13 March 1995 | Loiselet-Taisne, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document